# EUROPEAN PATENT SPECIFICATION

(11) **EP 4 011 531 B1**
(45) Date of publication and mention of the grant of the patent: **18.03.2026**
(21) Application number: 20213684.2
(22) Date of filing: 14.12.2020
(51) Int. Cl.: B23B 31/08, B23B 31/02, B23C 5/00

(54) **MILLING DAMPING DEVICE**
FRÄS-DÄMPFUNGS-VORRICHTUNG
DISPOSITIF D'AMORTISSEMENT DE FRAISAGE

(43) Date of publication of application: 15.06.2022
(73) Proprietor: Ceratizit Luxembourg Sàrl, 8232 Mamer (LU)
(72) Inventor: SCHUMACHER, Philippe, 8232 Mamer (LU)
(74) Representative: Ciesla, Dirk

(56) References cited:
- EP-A1- 1 669 147
- CH-B1- 698 558
- JP-A- H0 349 883
- US-A1- 2012 301 240
- US-A1- 2014 001 715

## Description

The present invention relates to a milling damping device comprising a damping element, a housing and a core element mounted rotatably relative to the housing about a longitudinal axis of the milling damping device, wherein a core meshing element of the core element is in meshing engagement with a housing meshing element of the housing, such that a rotation of the core element about the longitudinal axis is coupled to a rotation of the housing about the longitudinal axis, wherein the core meshing element and the housing meshing element form a circumferentially extending gap into which the damping element is inserted under engagement with each of the core meshing element and the housing meshing element.

US 2016 010 724 2 A1 shows a tool holder assembly comprising a tool holder body and a tool receiver defining a plurality of axial sleeves filled with dampening elements. The tool holder shown in US 2016 010 724 2 A1 entails the need to use different damping elements for each damping characteristic, e.g. soft or hard damping, desired. Thus, the damping elements must be replaced for each desired damping characteristic which leads to downtimes of a milling tool to be damped, i.e. the milling tool stands still at least during said replacement of the damping elements. US 2012/301240 A1 shows an example of a milling damping device according to the preamble of claim 1. It has a tool receiver being mounted in a holder so as to be elastically resilient in the axial direction.

One objective of the present invention could be seen in providing a milling damping device which allows to realize a broader range of damping characteristics, e.g. from soft to hard, while reducing the adjustment time needed to adjust the damping characteristics.

Such an objective is solved by the subject matter of claim 1. Advantageous embodiments of the invention can be found in the dependent claims, which can be freely combined amongst each other, the description, and the drawing.

The inventive milling damping device, i.e., the milling damping device according to the invention, comprises a damping element, a housing and a core element mounted rotatably relative to the housing about a longitudinal axis of the milling damping device, wherein a core meshing element of the core element is in meshing engagement with a housing meshing element of the housing, such that a rotation of the core element about the longitudinal axis is coupled to a rotation of the housing about the longitudinal axis, wherein the core meshing element and the housing meshing element form a circumferentially extending gap into which the damping element is inserted under engagement with each of the core meshing element and the housing meshing element, and wherein at least one of the core meshing element and the housing meshing element is designed and arranged to reversibly adjust a circumferentially measured width of the gap.

Advantageously, in that the width of the gap can be reversibly adjusted, i.e. the gap can be made broader or narrower, makes the damping characteristics of the damping element adjustable. Making the gap narrower compresses the damping element, i.e. it becomes harder. Making the gap broader relaxes the damping element, i.e. becomes softer and more compliant. Thus, different damping characteristics, e.g. from soft to hard, can be achieved by one and the same damping element. Especially, the damping element does not have to be replaced merely to provide for different damping characteristics which reduces the downtime of a milling tool equipped with the inventive milling damping device.

The term circumferentially is to be understood in the present disclosure to refer to a direction which is along an arc about the longitudinal axis of the inventive milling damping device.

At least one of the core meshing element and the housing meshing element comprises a first wedge element and a second wedge in sliding contact with the first wedge element, such that an axial displacement of the first wedge element relative to the second wedge element and parallel to the longitudinal axis is translated into a reduction of the width of the gap. Advantageously, such a wedge mechanism provides for a continuous reduction of the width of the gap, such that the damping element can be compressed continuously under a gap width reduction, i.e. the damping characteristics can be adjusted within the range from the damping element being completely relaxed to the damping element being compressed to a given maximum compression.

According to an embodiment of the inventive milling damping device the housing meshing element comprises the first wedge element and the second wedge element, wherein the inventive milling damping device comprises further an actuator, wherein the actuator extends through each of the first wedge element and the second wedge element, wherein a rear end of the actuator is engaged with the housing, and wherein a front end of the actuator is engaged with the first wedge element, such that displacing the front end of the actuator is translated into a circumferential motion of the first wedge element in a direction away from the second wedge element. The actuator provides for a compact means to precisely displace the first wedge element with respect to the second wedge element, especially when the rear end of the actuator is threadingly engaged with the housing, i.e. the gap width is a function of the amount the actuator has been rotated about a central actuator axis. Thus, preferably the rear end of the actuator is threadingly engaged with the housing.

According to a further embodiment of the inventive milling damping device it comprises further a pre-strained spring element arranged between the front end of the actuator and the first wedge element. The pre-strained spring element pre-strains the first wedge element axially, such that a once obtained gap width is better kept during milling vibrations propagating through the first wedge element. When the rear end of the actuator is threadingly engaged with the housing, the pre-strained spring preferably contacts the front end of the actuator.

According to a further embodiment of the inventive milling damping device each of the first wedge element and the second wedge follows an outer surface of the core element. Such a wedge element design reduces the space of the inventive milling damping device in a radial direction with respect to the longitudinal axis. For example, when the outer surface of the core element is arc shaped with respect to the longitudinal axis, each of the first wedge element and the second wedge element are arc shaped to follow the outer surface of the core element.

According to a further embodiment of the inventive milling damping device each of the first wedge element and the second wedge element comprises a helical sliding surface, and wherein these helical sliding surfaces are in matching contact each other. Advantageously, a compact displacement mechanism is provided for by this embodiment because the helical sliding surfaces run around the longitudinal axis, which saves space in a radial direction. The helical sliding surfaces can have a constant or variable pitch. Further, the helical sliding surface of the first wedge element can be inclined towards the core element, which enhances the axial stability of the engagement of the first wedge element with the second element.

The term helical is to be understood in the present disclosure as meaning that a surface runs around the longitudinal axis as it proceeds axially along the longitudinal axis.

According to a further embodiment of the inventive milling damping device the damping element is held in position within the gap by frictional contact with each of the core meshing element and the housing meshing element. This prevents the damping element from falling out from the housing avoiding additional mechanical retainer means in that regard.

According to a further embodiment of the inventive milling damping device the damping element is essentially cylindrical and extends essentially parallel to the longitudinal axis. The damping element being essentially cylindrical, i.e. having a rotational symmetry about a longitudinal damping element axis, makes it is easier to manufacture it, e.g. by extrusion, so that the production costs are lower. That the damping element may optionally further abut against the housing provides for a reproducible position of the damping element in the gap. Essentially parallel to the longitudinal axis is to be understood to include a tilting of the damping element with respect to the longitudinal axis in the range of +/- 15°.

According to a further embodiment of the inventive milling damping device the damping element is essentially made from a material selected from a polymer, especially an elastomer, copper or carbide. Essentially made from is to be understood that the damping element comprises more than 50 weight percent of the polymer, especially the elastomer, copper or carbide. These materials have each damping characteristics depending on their individual elastic behaviour, which thus sets the base range within they can be compressed during a reduction of the width of the gap.

According to a further embodiment of the inventive milling damping device the inventive milling damping device comprises further a drive shaft torque-transmittingly joined to the housing and protruding into an interior space of the housing, wherein the core element is slid onto the drive shaft and engaged rotatably with the drive shaft. Thus, the drive shaft carries the core element. The core element could rotate uncoupled to the housing, in absence of the meshing engagement between the core meshing element and the housing meshing element and any further optionally foreseen meshing engagements between the core element and the housing. The drive shaft is preferably joined reversibly to the housing by e.g. drive shaft screws.

According to a further embodiment of the inventive milling damping device the inventive milling damping device comprises further a pivot bearing, wherein the drive shaft carries rotatably fixed an inner ring of the pivot bearing and wherein the core element carries an outer ring of the pivot bearing. The pivot bearing reduces friction between the core element and the shaft.

According to a further embodiment of the inventive milling damping device a plurality of rolling elements is arranged between the inner ring and the outer ring. The arrangement of the plurality of rolling elements between the inner ring and the outer ring reduces the friction between the core element and the drive shaft even further, especially when the rolling elements are cylindrical or conical.

According to a further embodiment of the inventive milling damping device the core meshing element is a monolithic part of the core element. This makes it is easier to manufacture the inventive milling damping device, since the core meshing element and the core element can be formed in one step, e.g. by extrusion or milling.

According to a further embodiment of the inventive milling damping device the inventive milling damping device comprises a further damping element, wherein a further core meshing element of the core element is in meshing engagement with the housing meshing element of the housing, such that the rotation of the core element about the longitudinal axis continues to be coupled to a rotation of the housing about the longitudinal axis, wherein the further core meshing element and the housing meshing element form a circumferentially extending further gap into which the further damping element is inserted under engagement with each of the further core meshing element and the housing meshing element, and wherein at least one of the further core meshing element and the housing meshing element is designed and arranged to reversibly adjust a circumferentially measured width of the further gap. In other words, the housing meshing element is inserted between the core meshing element and the further core meshing element. The advantageous damping mechanism of the present invention, i.e. adjusting the gap and thereby compressing the damping element, is thus realized for two opposite rotation directions about the longitudinal axis, i.e. clockwise and counter-clockwise.

The second wedge element can be joined fixedly to the housing and the first wedge element can be joined movable relative to the housing both axially and circumferentially; the former movement being translated into the latter movement, i.e. an axial to circumferential movement translation

According to a further embodiment of the inventive milling damping device the first wedge element comprises a through hole into which the actuator is inserted, wherein the through hole of the first wedge element leaves lateral space to the actuator allowing for a circumferential motion of the first wedge element, wherein the second wedge element comprises a through hole into which the actuator is inserted, and wherein the through hole of the second wedge element is designed to keep the second wedge element in place during the circumferential motion of the first wedge element. Thus, the circumferential motion of the first wedge element can be controlled by the circumferential extension of the through hole of the first wedge element which is an easy to manufacture means for defining the maximum gap width attainable by the first wedge element and the adjacent core meshing element. According to a further embodiment of the inventive milling damping device it comprises further a coupling head joined to a front side of core element, wherein the coupling head comprises a protrusion member designed and arranged to be engaged with a milling body. The engagement protrusion provides for a better torque transmission from the core element to the milling body, which can be optionally comprised by the inventive milling damping device.

According to a further embodiment, a milling tool is provided comprising the inventive milling damping device. Thereby the advantageous damping function of the inventive milling damping device is integrated into the milling tool. Preferably the milling tool comprises a milling body coupled to the inventive milling damping device, wherein the milling body comprises at least one mounting recess designed and arranged to receive a cutting insert.

Further advantages and expediencies of the invention emerge from the following description of an exemplary, non-limiting embodiment of the invention with reference to the attached figures.

### Amongst the Figures show:

- Fig. 1:: an exploded view of a milling damping device according to an embodiment of the invention;
- Fig. 2:: a longitudinal cross-section through the milling damping device of Fig. 1;
- Fig. 3:: a detailed perspective view of two matching wedge elements of the milling damping device of Fig. 1;
- Fig. 4:: a detailed perspective view of the core element of the milling damping device of Fig. 1;
- Fig. 5:: a detailed perspective view of the housing of the milling damping device of Fig. 1;
- Fig. 6:: a detailed perspective view of the coupling head of the milling damping device of Fig. 1;
- Fig. 7:: a perpendicular cross-section through the milling damping device of Fig. 1.

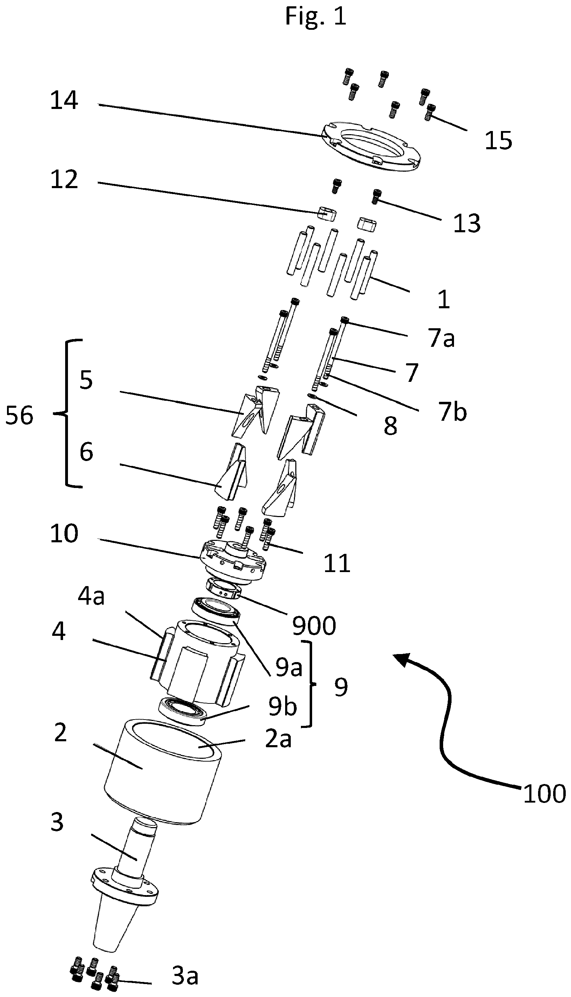

Fig. 1 shows a milling damping device 100 according to an embodiment of the invention in an exploded view. Under the following detailed description of the milling damping device 100, the milling damping device 100 will be described in an assembled condition which follows directly from Fig. 1.

The milling damping device 100 comprises eight cylindrical damping elements 1 (of which only one is assigned with the reference sign 1), a hollow cylindrical housing 2, a drive shaft 3 to which the housing 2 is joined for torque transmission by six shaft screws 3a (of which only one is assigned with the reference sign 3a) of the milling damping device 100, a core element 4 arranged within an interior space 2a of the housing 2, four core meshing elements 4a (of which only one is assigned with the reference sign 4a) rotatably fixed to the core element 4 by being formed as monolithic protrusions of the core element 4 and circumferentially separated from each other, and four wedge elements 5 (of which only one is assigned with the reference sign 5) and other four wedge elements 6 (of which only one is assigned with the reference sign 6) forming pairwise with their axially adjacent wedge element 5 four housing meshing elements 56 (of which only one is assigned with the reference sign 56) each joined to the housing 2 by mounting screws 7 (of which only one is assigned with the reference sign 7) of the milling damping device 100. The housing meshing elements 56 are each being kept under enhanced axial tension by bevel spring elements 8 (of which only one is assigned with the reference sign 8) of the milling damping device 100 positioned between each screw head 7a of the mounting screws 7 and each wedge element 5.

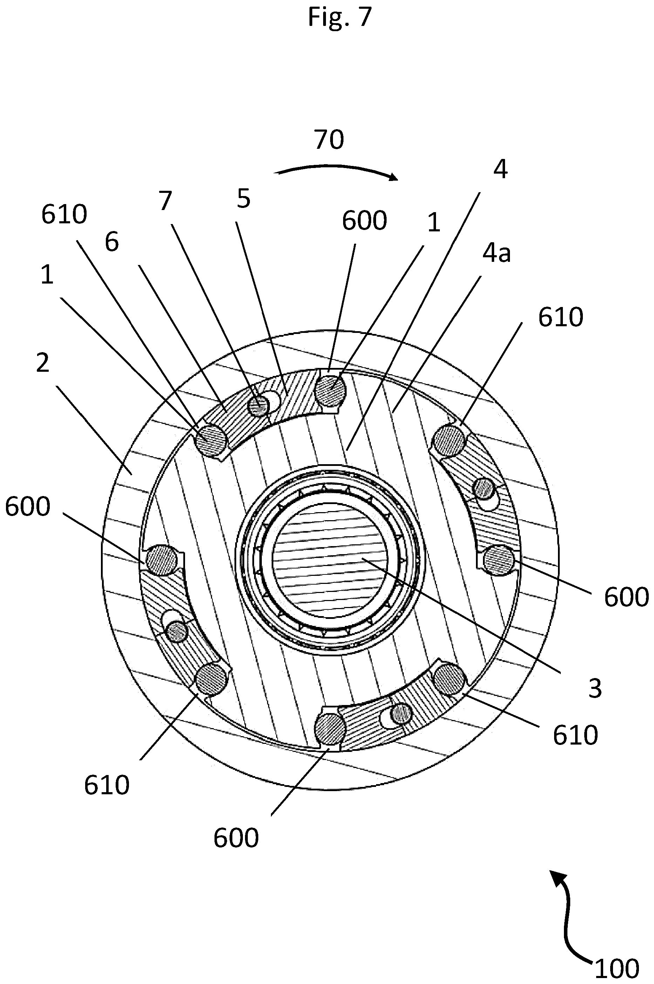

When the mounting screws 7 are inserted deeper into the housing 2 the screw heads 7a push the wedge elements 5 further into the housing 2 whereas each of the wedge elements 6 stands still by being fixedly joined to the housing 2 by the mounting screws 7; each mounting screw 7 comprises a threaded rear end 7b (of which only one is assigned with the reference sing 7b) engaged with the housing 2. The wedge elements 5 move at the same time circumferentially under contact with each of their matching wedge element 6 thereby closing gaps 600, 610 shown in Fig. 7 and formed between each of the wedge elements 5 and the thereto adjacent core meshing element 4a.

Each housing meshing element 56 is inserted between two core meshing elements 4a, whereby circumferentially an alternating sequence of a core meshing element 4a being followed by a housing meshing element 56 is formed, wherein the gap 600 or gap 610 is formed between each housing meshing element 56 and its adjacent core meshing element 4a.

Since the core element 4 is mounted rotatably onto the drive shaft 3, the core element 4 rotates when the gaps 600 (cf. Fig. 7) narrow (each wedge element 5 moves closer to the adjacent core meshing element 4a), thereby making each gap 610 formed between each of the wedge elements 6 (cf. Fig. 7) and the adjacent core meshing elements 4a narrow at the same time.

Since in each of said gaps 600, 610, i.e. the gaps 600 formed between the wedge elements 5 and the thereto adjacent core meshing element 4a and the gaps 610 formed between the wedge elements 6 and the thereto adjacent core meshing element 4a, one of the damping elements 1 is inserted under contact which each adjacent core meshing element 4a and wedge element 5 and wedge element 6, respectively, the gaps 600, 610 narrow by said movement of the mounting screws 7 deeper into the housing 2 and each damping element 1 is compressed more, becomes stiffer, thus milling vibrations are suppressed to a lesser degree.

The milling damping device 100 comprises further a pair of bearings 9, comprising two bearings 9a and 9b, mounting the core element 4 rotatably onto the drive shaft 3 on parts of where the drive shaft 3 protrudes into the housing 2. The core element 4 is axially secured by a clamping ring 900 of the milling damping device 100. Due to a compliance of each damping element 1, being formed from a material softer than each of the core meshing elements 4 and the housing meshing elements 56, the core element 4 can rotate about the drive shaft 3 against a resistance of the damping elements 1.

The milling damping device 100 comprises further a coupling head 10 mounted to a front end of the housing 2 by six head screws 11 (of which only one is assigned with the reference sign 11) of the milling damping device 100. The coupling head 10 comprises two protrusion members 12 (of which only one is assigned with the reference sign 12) protruding axially, such that the protrusion members 12 can be brought into engagement with a milling body. The protrusion members 12 are mounted to the coupling head 10 by mounting screws 13 (of which only one is assigned with the reference sign 13) of the coupling head 10.

The milling damping device 100 comprises further a sealing ring 14 mounted to the front end of the housing 2 by six mounting screws 15 (of which only one is assigned with the reference sign 15) of the milling damping device 100. The sealing ring 14 prevents the damping elements 1 from falling out of the housing 2 if frictional contact with the adjacent housing meshing element 56 and the adjacent core meshing element 4a is lost.

The path of torque transmission in the milling damping device 100 is from the drive shaft 3 via the shaft screws 3a via the housing 2 via the mounting screws 7 via the housing meshing elements 56 via the damping elements 1 via the meshing elements 4a via the core element 4 via the coupling head 10 onto the protrusion members 12 and vice versa.

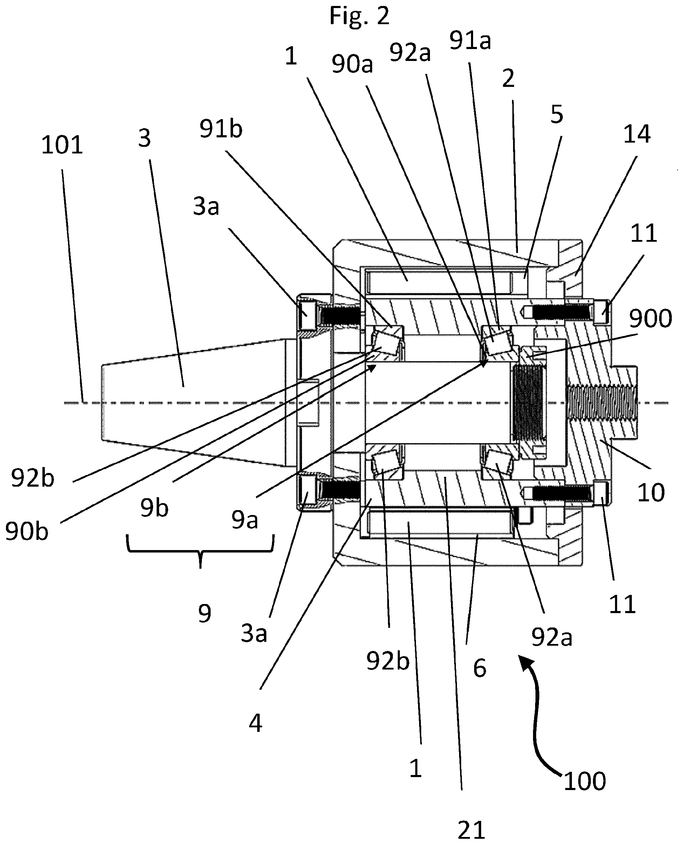

Fig. 2 shows a longitudinal cross-section through the milling damping device 100. Fig. 2 allows for a detailed description of the pair of bearings 9. The bearings 9a and 9b are each tapered roller bearings being arranged in an O arrangement (the bearing reaction forces, when drawn into Fig. 2, form an O shape, in contrast to an X arrangement). The bearing 9a comprises an inner ring 90a rotatably fixed to the drive shaft 3, an outer ring 91a rotatably fixed to the core element 4 and a plurality of tapered rollers 92a arranged between the inner ring 90a and the outer ring 91a for rolling on an inclined track. Analogously, the bearing 9b comprises an inner ring 90b rotatably fixed to the drive shaft 3, an outer ring 91b rotatably fixed to the core element 4 and a plurality of tapered rollers 92b arranged between the inner ring 90b and the outer ring 91b for rolling on an inclined track. The bearings 9a and 9b are thus designed to bear radial kinds of loads (radially with respect to a longitudinal axis 101 of the milling damping device 100 about which it can be rotated under a milling operation), and to a lesser extent axial kind of loads.

Since the inner ring 90a is arranged radially to the outer ring 91a (in contrast to a thrust bearing) the risk of thermal seizure, i.e. that the rings 90a and 91a are pressed against each other under axial loads and friction, is avoided. The same holds for the rings 90b and 91b.

As can be seen further in Fig. 2, the core element 4 comprises an abutment protrusion protruding 21 inwardly and being an axial abutment for each of the inner ring 90a and the inner ring 90b.

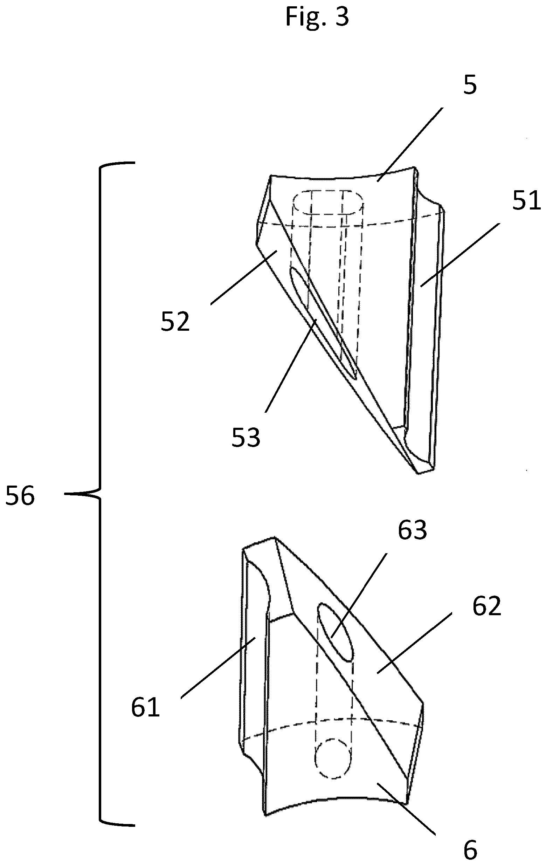

Fig. 3 shows a detailed exploded view of one of the housing meshing elements 56 comprising the wedge element 5 and the wedge element 6. The wedge element 5 has a u-shaped receiving recess 51 for receiving the thereto adjacent damping element 1. The receiving recess 51 extends parallel along the longitudinal axis 101. The wedge element 6 has an analogously designed and arranged receiving recess 61.

The wedge element 5 has further a helical sliding surface 52 which contacts a thereto matching helical sliding surface 62 of the wedge element 6.

The corresponding mounting screw 7 is inserted jointly into a through hole 53 of the wedge element 5 and a through hole 63 of the wedge element 6 (cf. Fig. 1). The through hole 53 is oblong in a viewing direction parallel along the longitudinal axis 101 leaving circumferentially space to the corresponding mounting screw 7, such that the wedge element 5 can slide under mutual surface of the sliding surfaces 52 and 62 along a helical track offered for by the sliding surface 62 when the mounting screw 7 is inserted deeper into the housing 2. In other words, the wedge element 6 is a ramp for the wedge element 5.

The through hole 63 of the wedge element 6 is designed to match the mounting screw 7 on parts of where the mounting screw 7 is inserted into the wedge element 6 keeping the wedge element 6 fixed to the housing 2. Thus, the receiving recesses 51 und 61 move relative to each other circumferentially away from each other and axially closer to each other, each during the insertion of the corresponding mounting screw 7 deeper into the housing 2.

The wedge element 5 approaches during the insertion of the mounting screw 7 deeper into the housing 2 the adjacent core meshing element 4a, i.e. the gap 600 formed therebetween narrows and compresses the inserted damping element 1. Due to that the damping element 1 is pressed thereby against the adjacent core meshing element 4a, the core element 4 rotates. Under this rotation of the core element 4 the core meshing element 4a adjacent to the wedge element 6 approaches the wedge element 6, i.e. the gap 610 formed therebetween narrows and compresses the inserted damping element 1.

Each of the wedge element 5 and the wedge element 6 is shaped to follow the outer contour of the core element 4, which thereby guides the wedge element 5 during its movement coupled to the axial movement of the corresponding mounting screw 7.

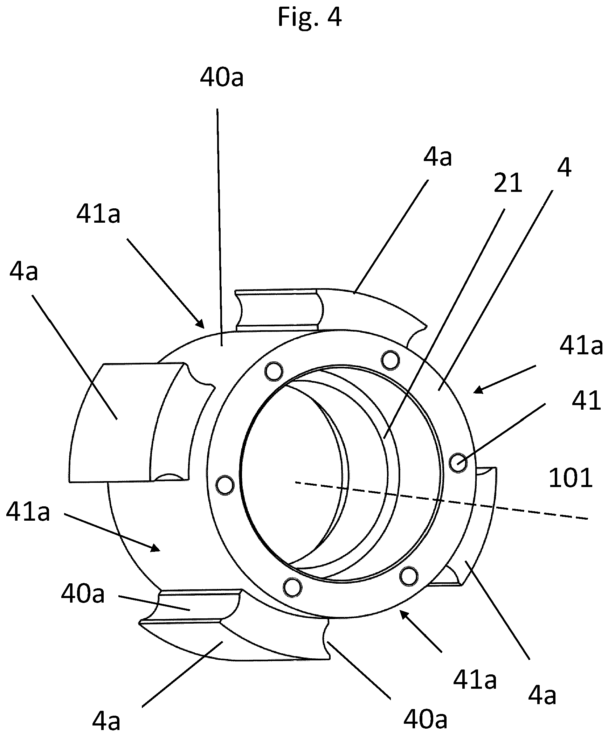

Fig. 4 shows a detailed view of the core element 4. The core meshing elements 4a have each on each side parallel to the longitudinal axis 101 a u-shaped receiving recess 40a for receiving the thereto adjacent damping element 1. Each receiving recess 40a extends parallel along the longitudinal axis 101. Screw holes 41 (of which only one is assigned with the reference sign 41) for receiving the mounting screws 11 can also be seen in Fig. 4 to be formed at a front side of the core element 4 to join the coupling head 10 to the core element 4.

The meshing elements 4a are separated from each other circumferentially leaving insertion gaps 41a into each of which one of the housing meshing elements 56 is inserted creating thereby gaps formed by pairs of the receiving recesses 51 and 40a and further gaps formed by pairs of the receiving recesses 61 and 40a, i.e. the gaps 600 and 610. A circumferentially measured width of these gaps increases when the mounting screws 7 are inserted deeper into the housing 2.

Into each of said gaps one of the damping elements 1 is inserted, such that each damping element 1 is strained to follow the circumferentially measured width of these gaps as this width changes under the axial movement of the mounting screws 7.

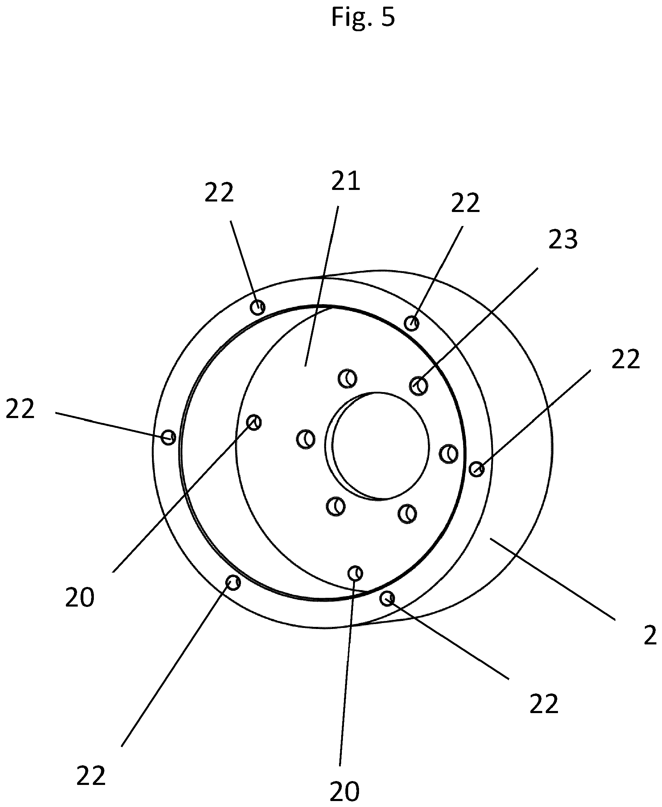

Fig. 5 shows a detailed view of the housing 2. Two of four screw holes 20 for receiving the mounting screws 7 in a back side 21 of the housing 2 can be seen. Further, screw holes 22 for receiving the mounting screws 15 and screw holes 23 (of which only one is assigned with the reference sign 23) for receiving the shaft screws 3a are shown in Fig. 5.

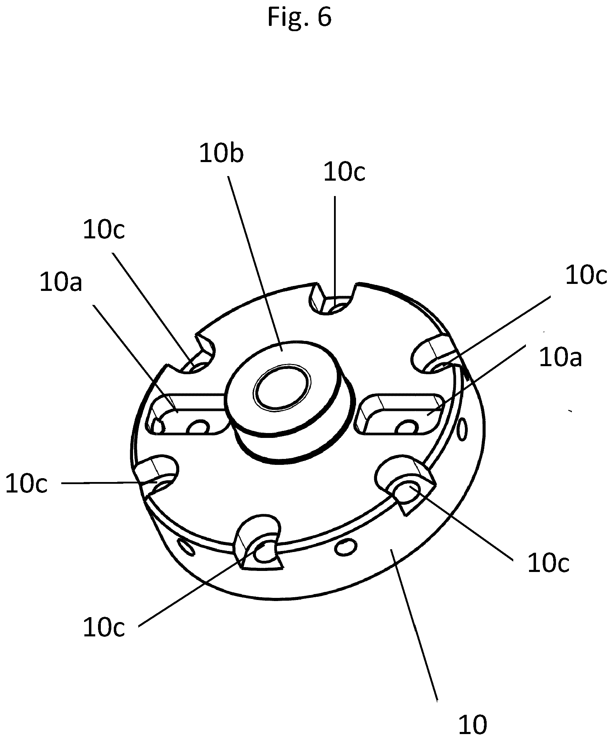

Fig. 6 shows a detailed view of the coupling head 10 having receiving recesses 10a for receiving the protrusion members 12, an axial alignment protrusion 10b for axial alignment of a milling body to be engaged with the coupling head 10 by the protrusion members 12. Further, screw holes 10c for receiving the mounting screws 11 can be seen in Fig. 6.

Fig. 7 shows a cross-section through the milling damping device 100, wherein the cross-section is oriented perpendicular to the longitudinal axis 101 and cuts axially half-way through each of the wedge element 5 and 6. The viewing direction in Fig. 7 is onto the back side 21 on parts of the interior space 2a.

Fig. 7 shows in detail that the gap 600 is formed between each wedge element 5 and the thereto adjacent core meshing element 4a and further that between each wedge element 6 and the thereto adjacent core meshing element 4a the gap 610 is formed (only one of each wedge elements 5, wedge elements 6 and core meshing elements 4a is assigned the corresponding reference sign for the sake of clarity, respectively). The damping elements 1 are inserted individually into each gap 600 and gap 610, i.e. one damping element 1 per gap 600 and gap 610.

When the mounting screws 7 are inserted deeper into the housing 2 the wedge elements 5 move in the circumferential direction 70 narrowing the gaps 600 and thereby compressing the damping elements 1 inserted into the gaps 600. The damping elements 1 of the gaps 600 become thereby stiffer.

Further, when the mounting screws 7 are inserted deeper into the housing 2 the wedge elements 5 move in the circumferential direction 70 relative to the housing 2, whereas the wedge elements 6 stand still relative to the housing 2.

When the wedge elements 5 move in the circumferential direction 70 the core element 4 and thereby the core meshing elements 4a rotate about the longitudinal axis 101 in the circumferential direction 70, thereby narrowing the gaps 610 because the thereto adjacent wedge elements 6 stand still relative to the housing 2.

The gaps 600 and 610 have each a width measured in the circumferential direction 70.

The milling damping device 100 may also be realized differently from the Figs. 1 bis 7 within the scope of the present invention, especially the adjustable damping function provided for by the adjustable gaps 600 and 610 into each of which one of the damping elements 1 is inserted is also maintained if only two core meshing element 4a and one housing meshing element 56 are engaged with each other by two damping elements 1.

Further, the milling damping device 100 may comprise a milling body engaged with the coupling head 10 thereby forming a milling tool.

## Claims

1. Milling damping device (100), comprising a damping element (1), a housing (2) and a core element (4) mounted rotatably relative to the housing (2) about a longitudinal axis (101) of the milling damping device (100), wherein a core meshing element (4a) of the core element (4) is in meshing engagement with a housing meshing element (56) of the housing (2), such that a rotation of the core element (4) about the longitudinal axis (101) is coupled to a rotation of the housing (2) about the longitudinal axis (101), wherein the core meshing element (4a) and the housing meshing element (56) form a circumferentially extending gap (600, 610) into which the damping element (1) is inserted under engagement with each of the core meshing element (4a) and the housing meshing element (56), and wherein at least one of the core meshing element (4a) and the housing meshing element (56) is designed and arranged to reversibly adjust a circumferentially measured width of the gap (600, 610), **characterized in that** at least one of the core meshing element (4a) and the housing meshing element (56) comprises a first wedge element (5) and a second wedge element (6) in sliding contact with the first wedge element (5), such that an axial displacement of the first wedge element (5) relative to the second wedge element (6) and parallel to the longitudinal axis (101) is translated into a reduction of the width of the gap (600, 610).

2. Milling damping device (100) according to claim 1, wherein the housing meshing element (4a) comprises the first wedge element (5) and the second wedge element (6), and wherein the milling damping device (100) comprises further an actuator (7), wherein the actuator (7) extends through each of the first wedge element (5) and the second wedge element (6), wherein a rear end (7b) of the actuator (7) is engaged with the housing (2), and wherein a front end (7a) of the actuator (7) is engaged with the first wedge element (5), such that displacing the front end (7a) of the actuator (7) is translated into a circumferential motion of the first wedge element (5) in a direction away from the second wedge element (6).

3. Milling damping device (100) according to claim 2, wherein the milling damping device (100) comprises further a pre-strained spring element (8) arranged between the front end (7a) of the actuator (7) and the first wedge element (5).

4. Milling damping device (100) according to any of claims 1 to 3, wherein each of the first wedge element (5) and the second wedge (7) follows an outer surface (40a) of the core element (4).

5. Milling damping device (100) according to any of claims 1 to 4, wherein each of the first wedge element (5) and the second wedge element (6) comprises a helical sliding surface (52, 62), and wherein these helical sliding surfaces (52, 62) are in matching contact with each other.

6. Milling damping device (100) according to any of the preceding claims, wherein the damping element (1) is held in position within the gap (600, 610) by frictional contact with each of the core meshing element (4a) and the housing meshing element (56).

7. Milling damping device (100) according to any of the preceding claims, wherein the damping element (1) is essentially cylindrical and extends essentially parallel to the longitudinal axis (101).

8. Milling damping device (100) according to any of the preceding claims, wherein the damping element (1) is essentially made from a material selected from a polymer, especially an elastomer, copper or carbide.

9. Milling damping device (100) according to any of the preceding claims, wherein the milling damping device (100) comprises further a drive shaft (3) torque-transmittingly joined to the housing (2) and protruding into an interior space (2a) of the housing (2), and wherein the core element (4) is slid onto the drive shaft (3) and engaged rotatably with the drive shaft (3).

10. Milling damping device (100) according to claim 9, wherein the milling damping device (100) comprises further a pivot bearing (9a, 9b), wherein the drive shaft (3) carries rotatably fixed an inner ring (90a, 90b) of the pivot bearing (9a, 9b) and wherein the core element (4) carries an outer ring (91a, 91b) of the pivot bearing (9a, 9b).

11. Milling damping device (100) according to claim 10, wherein a plurality of rolling elements (92a, 92b) is arranged between the inner ring (90a, 90b) and the outer ring (91a, 91b).

12. Milling damping device (100) according to any the preceding claims, wherein the core meshing element (4a) is a monolithic part of the core element (4).

13. Milling damping device (100) according to any of the preceding claims, wherein the milling damping device (100) comprises a further damping element (1), wherein a further core meshing element (4a) of the core element (4) is in meshing engagement with the housing meshing element (56), such that the rotation of the core element (4) about the longitudinal axis (101) continues to be coupled to a rotation of the housing (2) about the longitudinal axis (101), wherein the further core meshing element (4a) and the housing meshing element (56) form a circumferentially extending further gap (600, 610) into which the further damping element (1) is inserted under engagement with each of the further core meshing element (4a) and the housing meshing element (56), and wherein at least one of the further core meshing element (4a) and the housing meshing element (56) is designed and arranged to reversibly adjust a circumferentially measured width of the further gap (600, 610).

14. Milling damping device (100) according to any one of claims 2 to 3, wherein the first wedge element comprises a through hole (53) into which the actuator (7) is inserted, wherein the through hole (53) of the first wedge element (5) leaves lateral space to the actuator (7) allowing for a circumferential motion of the first wedge element (5), wherein the second wedge element (6) comprises a through hole (63) into which the actuator (7) is inserted and wherein the through hole (63) of the second wedge element (6) is designed to keep the second wedge element (6) in place during the circumferential motion of the first wedge element (5).

## Patentansprüche

1. Fräsdämpfungsvorrichtung (100), umfassend ein Dämpfungselement (1), ein Gehäuse (2) und ein Kernelement (4), das relativ zu dem Gehäuse (2) um eine Längsachse (101) der Fräsdämpfungsvorrichtung (100) drehbar gelagert ist, wobei ein Kerneingriffselement (4a) des Kernelements (4) in kämmendem Eingriff mit einem Gehäuseeingriffselement (56) des Gehäuses (2) steht, so dass eine Drehung des Kernelements (4) um die Längsachse (101) mit einer Drehung des Gehäuses (2) um die Längsachse (101) gekoppelt ist, wobei das Kerneingriffselement (4a) und das Gehäuseeingriffselement (56) einen sich in Umfangsrichtung erstreckenden Spalt (600, 610) bilden, in den das Dämpfungselement (1) unter Eingriff mit jedem des Kerneingriffselements (4a) und des Gehäuseeingriffselements (56) eingesetzt ist, und wobei das Kerneingriffselement (4a) und/oder das Gehäuseeingriffselement (56) dazu ausgebildet und angeordnet ist, eine in Umfangsrichtung gemessene Breite des Spalts (600, 610) umkehrbar einzustellen, **dadurch gekennzeichnet, dass** das Kerneingriffselement (4a) und/oder das Gehäuseeingriffselement (56) ein erstes Keilelement (5) und ein zweites Keilelement (6) in Gleitkontakt mit dem ersten Keilelement (5) umfasst, so dass eine axiale Verschiebung des ersten Keilelements (5) relativ zu dem zweiten Keilelement (6) und parallel zu der Längsachse (101) in eine Verringerung der Breite des Spalts (600, 610) umgesetzt wird.

2. Fräsdämpfungsvorrichtung (100) nach Anspruch 1, wobei das Gehäuseeingriffselement (4a) das erste Keilelement (5) und das zweite Keilelement (6) umfasst und wobei die Fräsdämpfungsvorrichtung (100) ferner ein Stellglied (7) umfasst, wobei sich das Stellglied (7) sowohl durch das erste Keilelement (5) als auch das zweite Keilelement (6) erstreckt, wobei ein hinteres Ende (7b) des Stellglieds (7) mit dem Gehäuse (2) in Eingriff steht und wobei ein vorderes Ende (7a) des Stellglieds (7) mit dem ersten Keilelement (5) in Eingriff steht, so dass das Verschieben des vorderen Endes (7a) des Stellglieds (7) in eine Umfangsbewegung des ersten Keilelements (5) in einer Richtung weg von dem zweiten Keilelement (6) umgesetzt wird.

3. Fräsdämpfungsvorrichtung (100) nach Anspruch 2, wobei die Fräsdämpfungsvorrichtung (100) ferner ein vorgespanntes Federelement (8) umfasst, das zwischen dem vorderen Ende (7a) des Stellglieds (7) und dem ersten Keilelement (5) angeordnet ist.

4. Fräsdämpfungsvorrichtung (100) nach einem der Ansprüche 1 bis 3, wobei sowohl das erste Keilelement (5) als auch der zweite Keil (7) einer Außenfläche (40a) des Kernelements (4) folgt.

5. Fräsdämpfungsvorrichtung (100) nach einem der Ansprüche 1 bis 4, wobei sowohl das erste Keilelement (5) als auch das zweite Keilelement (6) eine spiralförmige Gleitfläche (52, 62) umfasst und wobei diese spiralförmigen Gleitflächen (52, 62) in passendem Kontakt miteinander stehen.

6. Fräsdämpfungsvorrichtung (100) nach einem der vorhergehenden Ansprüche, wobei das Dämpfungselement (1) durch Reibkontakt sowohl mit dem Kerneingriffselement (4a) als auch dem Gehäuseeingriffselement (56) in Position innerhalb des Spalts (600, 610) gehalten wird.

7. Fräsdämpfungsvorrichtung (100) nach einem der vorhergehenden Ansprüche, wobei das Dämpfungselement (1) im Wesentlichen zylindrisch ist und sich im Wesentlichen parallel zur Längsachse (101) erstreckt.

8. Fräsdämpfungsvorrichtung (100) nach einem der vorhergehenden Ansprüche, wobei das Dämpfungselement (1) im Wesentlichen aus einem Material hergestellt ist, das aus einem Polymer, insbesondere einem Elastomer, Kupfer oder Carbid, ausgewählt ist.

9. Fräsdämpfungsvorrichtung (100) nach einem der vorhergehenden Ansprüche, wobei die Fräsdämpfungsvorrichtung (100) ferner eine Antriebswelle (3) umfasst, die drehmomentübertragend mit dem Gehäuse (2) verbunden ist und in einen Innenraum (2a) des Gehäuses (2) ragt, und wobei das Kernelement (4) auf die Antriebswelle (3) aufgeschoben ist und drehbar mit der Antriebswelle (3) in Eingriff steht.

10. Fräsdämpfungsvorrichtung (100) nach Anspruch 9, wobei die Fräsdämpfungsvorrichtung (100) ferner ein Schwenklager (9a, 9b) umfasst, wobei die Antriebswelle (3) einen Innenring (90a, 90b) des Schwenklagers (9a, 9b) drehbar fixiert trägt und wobei das Kernelement (4) einen Außenring (91a, 91b) des Schwenklagers (9a, 9b) trägt.

11. Fräsdämpfungsvorrichtung (100) nach Anspruch 10, wobei mehrere Wälzkörper (92a, 92b) zwischen dem Innenring (90a, 90b) und dem Außenring (91a, 91b) angeordnet sind.

12. Fräsdämpfungsvorrichtung (100) nach einem der vorhergehenden Ansprüche, wobei das Kerneingriffselement (4a) ein einstückiger Teil des Kernelements (4) ist.

13. Fräsdämpfungsvorrichtung (100) nach einem der vorhergehenden Ansprüche, wobei die Fräsdämpfungsvorrichtung (100) ein weiteres Dämpfungselement (1) umfasst, wobei ein weiteres Kerneingriffselement (4a) des Kernelements (4) in kämmendem Eingriff mit dem Gehäuseeingriffselement (56) steht, sodass die Drehung des Kernelements (4) um die Längsachse (101) weiterhin mit einer Drehung des Gehäuses (2) um die Längsachse (101) gekoppelt wird, wobei das weitere Kerneingriffselement (4a) und das Gehäuseeingriffselement (56) einen sich in Umfangsrichtung erstreckenden weiteren Spalt (600, 610) bilden, in den das weitere Dämpfungselement (1) unter Eingriff mit jeweils dem weiteren Kerneingriffselement (4a) und dem Gehäuseeingriffselement (56) eingesetzt ist, und wobei das weitere Kerneingriffselement (4a) und/oder das Gehäuseeingriffselement (56) dazu ausgebildet und angeordnet ist, eine in Umfangsrichtung gemessene Breite des weiteren Spalts (600, 610) umkehrbar einzustellen.

14. Fräsdämpfungsvorrichtung (100) nach einem der Ansprüche 2 bis 3, wobei das erste Keilelement ein Durchgangsloch (53) umfasst, in welches das Stellglied (7) eingesetzt ist, wobei das Durchgangsloch (53) des ersten Keilelements (5) lateralen Raum zum Stellglied (7) lässt, der eine Umfangsbewegung des ersten Keilelements (5) ermöglicht, wobei das zweite Keilelement (6) ein Durchgangsloch (63) umfasst, in welches das Stellglied (7) eingesetzt ist, und wobei das Durchgangsloch (63) des zweiten Keilelements (6) dazu ausgelegt ist, das zweite Keilelement (6) während der Umfangsbewegung des ersten Keilelements (5) an Ort und Stelle zu halten.

## Revendications

1. Dispositif d'amortissement de fraisage (100), comprenant un élément amortisseur (1), un réceptacle (2) et un élément central (4) monté rotatif par rapport au réceptacle (2) autour d'un axe longitudinal (101) du dispositif d'amortissement de fraisage (100), un élément d'engrènement d'élément central (4a) de l'élément central (4) étant engrené avec un élément d'engrènement de réceptacle (56) du réceptacle (2), de telle sorte qu'une rotation de l'élément central (4) autour de l'axe longitudinal (101) soit couplée à une rotation du réceptacle (2) autour de l'axe longitudinal (101), l'élément d'engrènement d'élément central (4a) et l'élément d'engrènement de réceptacle (56) formant un intervalle circonférentiel (600, 610) dans lequel l'élément amortisseur (1) est inséré en prise avec chacun de l'élément d'engrènement d'élément central (4a) et de l'élément d'engrènement de réceptacle (56), et au moins l'un de l'élément d'engrènement d'élément central (4a) et de l'élément d'engrènement de réceptacle (56) étant conçu et disposé pour ajuster de manière réversible une largeur mesurée circonférentiellement de l'intervalle (600, 610), **caractérisé en ce qu'**au moins l'un de l'élément d'engrènement d'élément central (4a) et de l'élément d'engrènement de réceptacle (56) comprend un premier élément cunéiforme (5) et un second élément cunéiforme (6) en contact glissant avec le premier élément cunéiforme (5), de sorte qu'un déplacement axial du premier élément cunéiforme (5) par rapport au second élément cunéiforme (6) et parallèlement à l'axe longitudinal (101) se traduit par une réduction de la largeur de l'intervalle (600, 610).

2. Dispositif d'amortissement de fraisage (100) selon la revendication 1, dans lequel l'élément d'engrènement de réceptacle (4a) comprend le premier élément cunéiforme (5) et le second élément cunéiforme (6), et le dispositif d'amortissement de fraisage (100) comprenant en outre un actionneur (7), l'actionneur (7) traversant chacun du premier élément cunéiforme (5) et du second élément cunéiforme (6), une extrémité arrière (7b) de l'actionneur (7) étant en prise avec le réceptacle (2), et une extrémité avant (7a) de l'actionneur (7) étant en prise avec le premier élément cunéiforme (5), de sorte que le déplacement de l'extrémité avant (7a) de l'actionneur (7) se traduise par un mouvement circonférentiel du premier élément cunéiforme (5) dans une direction à l'opposé du second élément cunéiforme (6).

3. Dispositif d'amortissement de fraisage (100) selon la revendication 2, le dispositif d'amortissement de fraisage (100) comprenant en outre un élément élastique précontraint (8) disposé entre l'extrémité avant (7a) de l'actionneur (7) et le premier élément cunéiforme (5).

4. Dispositif d'amortissement de fraisage (100) selon l'une quelconque des revendications 1 à 3, dans lequel chacun du premier élément cunéiforme (5) et du second élément cunéiforme (7) suit une surface extérieure (40a) de l'élément central (4).

5. Dispositif d'amortissement de fraisage (100) selon l'une quelconque des revendications 1 à 4, dans lequel chacun du premier élément cunéiforme (5) et du second élément cunéiforme (6) comprend une surface de glissement hélicoïdale (52, 62), et dans lequel ces surfaces de glissement hélicoïdales (52, 62) sont en contact complémentaire l'une avec l'autre.

6. Dispositif d'amortissement de fraisage (100) selon l'une quelconque des revendications précédentes, dans lequel l'élément d'amortissement (1) est maintenu en place à l'intérieur de l'intervalle (600, 610) par contact de frottement avec chacun de l'élément d'engrènement d'élément central (4a) et de l'élément d'engrènement de réceptacle (56).

7. Dispositif d'amortissement de fraisage (100) selon l'une quelconque des revendications précédentes, dans lequel l'élément d'amortissement (1) est sensiblement cylindrique et s'étend sensiblement parallèlement à l'axe longitudinal (101).

8. Dispositif d'amortissement de fraisage (100) selon l'une quelconque des revendications précédentes, dans lequel l'élément d'amortissement (1) est essentiellement réalisé en un matériau choisi parmi un polymère, en particulier un élastomère, du cuivre ou du carbure.

9. Dispositif d'amortissement de fraisage (100) selon l'une quelconque des revendications précédentes, le dispositif d'amortissement de fraisage (100) comprenant en outre un arbre d'entraînement (3) en liaison de transmission de couple avec le réceptacle (2) et faisant saillie dans un espace intérieur (2a) du réceptacle (2), et dans lequel l'élément central (4) est adapté par coulissement autour de l'arbre d'entraînement (3) et mis en prise à rotation avec l'arbre d'entraînement (3).

10. Dispositif d'amortissement de fraisage (100) selon la revendication 9, le dispositif d'amortissement de fraisage (100) comprenant en outre un palier de pivotement (9a, 9b), dans lequel une bague intérieure (90a, 90b) du palier de pivotement (9a, 9b) est fixée à rotation sur l'arbre d'entraînement (3) et dans lequel une bague extérieure (91a, 91b) du palier de pivotement (9a, 9b) est adaptée sur l'élément central (4).

11. Dispositif d'amortissement de fraisage (100) selon la revendication 10, dans lequel une pluralité d'éléments roulants (92a, 92b) est disposée entre la bague intérieure (90a, 90b) et la bague extérieure (91a, 91b).

12. Dispositif d'amortissement de fraisage (100) selon l'une quelconque des revendications précédentes, dans lequel l'élément d'engrènement d'élément central (4a) est une partie monolithique de l'élément central (4).

13. Dispositif d'amortissement de fraisage (100) selon l'une quelconque des revendications précédentes, le dispositif d'amortissement de fraisage (100) comprenant un autre élément d'amortissement (1), dans lequel un autre élément d'engrènement d'élément central (4a) de l'élément central (4) est engrené avec l'élément d'engrènement de réceptacle (56), de sorte que la rotation de l'élément central (4) autour de l'axe longitudinal (101) continue d'être couplée à une rotation du réceptacle (2) autour de l'axe longitudinal (101), dans lequel l'autre élément d'engrènement d'élément central (4a) et l'élément d'engrènement de réceptacle (56) forment un autre intervalle (600, 610) s'étendant circonférentiellement dans lequel l'autre élément d'amortissement (1) est inséré en prise avec chacun de l'autre élément d'engrènement d'élément central (4a) et de l'élément d'engrènement de réceptacle (56), et dans lequel l'autre élément d'engrènement d'élément central (4a) et/ou l'élément d'engrènement de réceptacle (56) sont conçus et disposés pour ajuster de manière réversible une largeur mesurée circonférentiellement de l'autre intervalle (600, 610).

14. Dispositif d'amortissement de fraisage (100) selon l'une quelconque des revendications 2 et 3, dans lequel le premier élément cunéiforme comprend un trou traversant (53) dans lequel l'actionneur (7) est inséré, dans lequel le trou traversant (53) du premier élément cunéiforme (5) laisse un espace latéral pour l'actionneur (7) permettant un mouvement circonférentiel du premier élément cunéiforme (5), dans lequel le second élément cunéiforme (6) comprend un trou traversant (63) dans lequel l'actionneur (7) est inséré et dans lequel le trou traversant (63) du second élément cunéiforme (6) est conçu pour maintenir le second élément cunéiforme (6) en place pendant le mouvement circonférentiel du premier élément cunéiforme (5).
